Europäisches Patentamt

European Patent Office

Office européen des brevets

(11) Veröffentlichungsnummer: **0 155 342**

**A2**

(12) **EUROPÄISCHE PATENTANMELDUNG**

(21) Anmeldenummer: 84105962.9

(22) Anmeldetag: 30.05.84

(51) Int. Cl.⁴: **B 65 G 65/42**
B 65 G 65/44, B 65 G 47/19

(30) Priorität: 13.06.83 DE 3321296

(43) Veröffentlichungstag der Anmeldung:
25.09.85 Patentblatt 85/39

(84) Benannte Vertragsstaaten:
AT BE DE FR IT NL

(71) Anmelder: Klöckner-Humboldt-Deutz
Aktiengesellschaft
Deutz-Mülheimer-Strasse 111 Postfach 80 05 09
D-5000 Köln 80(DE)

(72) Erfinder: Zimmerman, Othmar
Hermeskamp 5
D-4630 Bochum(DE)

(74) Vertreter: Beisner, Klaus, Dipl.-Ing. et al,
c/o KHD Humboldt Wedag AG Patente und Lizenzen
Wiersbergstrasse Postfach 91 04 57
D-5000 Köln 91(DE)

(54) Verfahren und Vorrichtung zum Abziehen eines Bunkers mit unter dem Abzugsschlitz wirkenden verschieden Förderorganen.

(57) Die Erfindung betrifft ein Verfahren und eine Vorrichtung zum Abziehen eines Bunkers mit einem Abzugsschlitz und einer seitlichen Austragsöffnung, wobei das Bunkergut unter dem Abzugsschlitz (5) bis in den Bereich der Austragsöffnung (8) mittels mindestens eines Abzugsförderers (6) in Längsrichtung des Abzugsschlitzes (5) bewegt und im Bereich der Austragsöffnung (8) mittels eines Austragsförderers (7) ausgetragen wird. Problematisch ist hier bisher ein hoher Geräuschpegel langer Schwingförderrinnensysteme bzw. eine sehr hohe Leistungsaufnahme bei der Verwendung eines einzelnen Transportbandes unter dem Abzugsschlitz (5). Die Lösung sieht vor, daß als Abzugsförderer (6) mindestens ein nicht schwingendes Förderorgan, vorzugsweise ein Transportband verwendet wird in Kombination mit einer Schwingrinne als Austragsförderer (7).

./...

Croydon Printing Company Ltd.

Anlage zum Patentgesuch der - 1 -    K H D
Klöckner-Humboldt-Deutz              H 83/32

vom 22. Mai 1984

Verfahren und Vorrichtung zum Abziehen eines Bunkers
mit unter dem Abzugsschlitz wirkenden verschiedenen
Förderorganen

---

Die Erfindung betrifft ein Verfahren und eine
Vorrichtung zum Abziehen eines Bunkers mit einem
Abzugsschlitz und einer seitlichen Austragsöffnung,
wobei das Bunkergut unter dem Abzugsschlitz bis in
den Bereich der Austragsöffnung mittels mindestens
eines Abzugsförderers in Längsrichtung des
Abzugsschlitzes bewegt und im Bereich der
Austragsöffnung mittels eines Austragsförderers
ausgetragen wird.

Bei Bunkern mit Abzugsschlitzen, insbesondere bei
großen Bunkern für Erz, Schlacke, Kohle etc. ist es
üblich, im Abzugsschlitz ein Förderorgan,
insbesondere ein Transportband anzuordnen, das das
Gut unter dem Abzugsschlitz, der von erheblicher
Länge sein kann, zur Austragsöffnung hin fördert und
aus dieser austrägt. Ein derartiger Stand der Technik
wird beispielsweise in der DE-AS 1 076 566 sowie in
der DE-PS 462 710 beschrieben. Durch das große
Gewicht des Bunkerinhaltes bedingt, sind bei diesen
bekannten Abzugsvorrichtungen starke Antriebsmotore
notwendig, desweiteren sind die beweglichen Teile der
Förderer einem erheblichen Verschleiß ausgesetzt.

Aus der DE-OS 30 35 930 ist ein Verfahren sowie eine Vorrichtung zum Abziehen eines Bunkers mit Abzugsschlitz bekannt, wobei unter dem Abzugsschlitz mehrteilige Resonanzschwingförderer angeordnet sind. Ein derartiges Schwingförderrinnensystem erzeugt bei sehr langen Abzugsschlitzen einen relativ hohen Geräuschpegel, ist konstruktiv aufwendig und wird nicht allen Bedarfsfällen gerecht.

Es ist die Aufgabe der vorliegenden Erfindung, ein Verfahren und eine Vorrichtung zum Austragen von Bunkergut aus dem Abzugsschlitz aufzuzeigen, das

a) einen geringeren Geräuschpegel aufweist,

b) einfach im konstruktiven Aufbau ist,

c) eine verhältnismäßig geringe Antriebsleistung der Motore benötigt,

d) bei geringem Verschleiß hohe Standzeiten gewährleistet und

e) das sowohl niedrigere Investitionskosten erfordert als auch die Betriebskosten gegenüber den bekannten Vorrichtungen und Verfahren senkt.

Die Lösung der gestellten Aufgabe gelingt erfindungsgemäß dadurch, daß als Abzugsförderer mindestens ein nicht schwingendes Förderorgan, vorzugsweise ein Transportband verwendet wird. Gegenüber der Verwendung nur schwingender Förderorgane wird auch die Verdichtung des Bunkergutes vermindert und gegenüber der Verwendung nur eines einzigen Transportbandes im gesamten Abzugsschlitz wird eine verhältnismäßig geringere Motorleistung erforderlich, da nur ein Teil des Bunkerinhaltes bewegt werden muß.

In vorteilhafter Ausgestaltung der Erfindung ist vorgesehen, daß als Austragsförderer ein schwingendes Förderorgan, vorzugsweise eine Schwingförderrinne verwendet wird. Durch die Verwendung der bewährten Schwingförderrinne im Austragsbereich des Bunkers wird ein kontinuierlicher und gut regelbarer Austrag des Bunkergutes gewährleistet. Die Verwendung eines Transportbandes auch im Bereich der Austragsöffnung würde nachteilig besonders hohe Antriebsleistungen verursachen einen erhöhten Verschleiß des Bunkergutes bewirken, da sich das auszutragende Gut besonders stark an dem von oben aus dem Bunker nachrutschenden und an der Vorderwand rückstauenden Gutes reiben würde und diese besonders hohen Reibkräfte in diesem Bereich überwunden werden müssen. Die Verwendung gerade einer Schwingförderrinne im Austragsbereich erleichtert auch die Arbeit der zuführenden Förderorgane.

In Ausgestaltung der Erfindung ist ferner vorteilhaft vorgesehen, daß der Austragsförderer quer zur Längsrichtung des Abzugsschlitzes das Bunkergut austrägt. Durch diese Verfahrensweise kann mehr als die Hälfte des Bunkerinhaltes ausgetragen werden, ohne daß die Einschaltung der Abzugsförderer erforderlich wird. Dadurch wird überflüssiger Kraftaufwand zur Bewegung von Bunkergut verhindert.

In weiterer Ausgestaltung der Erfindung ist vorteilhaft vorgesehen, daß die Förderung eines vorgeschalteten Förderorgans, insbesondere des

0155342

K H D
H 83/32

Abzugsförderers in Abhängigkeit von der Füllung des
Bunkers, insbesondere nach Maßgabe der Schichthöhe
des Bunkergutes auf dem nachgeschalteten Förderorgan
geregelt wird. Durch diese Verfahrensweise können die
Betriebskosten gesenkt werden, da nur der Teil des
Bunkerinhaltes bewegt wird, der auch ausgetragen
werden kann. Der andere Teil des Bunkerinhaltes, bei
dem es lediglich zu einer Bewegung auf der Stelle
kommen würde, verbleibt im Stillstand oder wird
entsprechend langsam bewegt, wodurch sowohl der
Kraftbedarf gesenkt, ein Verklemmen des Bunkergutes,
sowie ein erhöhter Verschleiß verhindert wird. Auch
wird eine Entmischung des nicht ausgetragenen
Bunkergutes weitgehend vermieden. Die Standzeiten der
abgeschalteten Förderorgane werden erhöht durch eine
Senkung ihrer Betriebszeiten.

In weiterer Ausgestaltung der Erfindung ist
vorgesehen, daß das vorgeschaltete Förderorgan erst
dann eingeschaltet wird, wenn auf dem
nachgeschalteten Förderorgan eine bestimmte minimale
Schichthöhe unterschritten wird und wieder
abgeschaltet, wenn sich eine bestimmte maximale
Schichthöhe eingestellt hat. Hierdurch wird eine
besonders einfache Art der Regelung der Ein- und
Ausschaltung der Förderorgane aufgezeigt.

Zur Durchführung des Verfahrens ist vorgesehen, einen
Abzugsförderer als nicht schwingendes Förderorgan,
vorzugsweise als Transportband auszubilden, wobei der
Austragsförderer als schwingendes Förderorgan,
vorzugsweise als Schwingförderrinne, ausgebildet ist.
Dadurch kann das erfindungsgemäße Verfahren besonders
einfach und kostengünstig durchgeführt werden.

In Ausgestaltung der Erfindung sind in der Vorrichtung mehrere Abzugsförderer vorgesehen, wobei jeder Abzugsförderer einen eigenen regelbaren Antrieb aufweist und die einzelnen Abzugsförderer derart beweglich miteinander verbunden sind, daß das Bunkergut zur Austragsöffnung gefördert wird. Durch die mehrteilige Ausbildung wird es ermöglicht, kleinere Einheiten von Förderorganen einzusetzen bzw. kostengünstige Standardmaschinen an Ort und Stelle miteinander zu verbinden, wodurch auch Montage- und Transportkosten gesenkt werden können.

In weiterer Ausgestaltung der Erfindung wird vorgesehen, daß der Austragsförderer quer zur Längsrichtung des Abzugsschlitzes und die Abzugsförderer in Längsrichtung des Abzugsschlitzes angeordnet sind. Auf diese Weise können bestehende Bunkereinrichtungen in Tunneln genützt und umgerüstet werden, wobei auf eine Tunnelerweiterung verzichtet werden kann.

Besonders vorteilhaft werden als Abzugsförderer Stahlzellenbänder, Plattenbänder, Kratzförderer, Kettenförderer, Schüttelrutschen oder Schubwagenspeiser oder eine Kombination der genannten Förderorgane eingesetzt, wobei der Austragsförderer als Schwingförderrinne, kurzer Gurtförderer, Schüttelrutsche oder als Schubwagenspeiser ausgebildet ist. Die Möglichkeit der aufgezeigten Kombinationen läßt eine flexible Anpassung an die örtlichen Gegebenheiten, insbesondere an das zu fördernde Bunkergut zu.

In weiterer Ausgestaltung der Erfindung ist vorgesehen, daß die Abzugsförderer federnd gelagert

0155342
K H D
H 83/32

sind und einen Näherungsinitiator zur Bestimmung der Schichthöhe aufweisen. Diese Maßnahme ermöglicht vorteilhaft eine kostengünstige aber ausreichend genaue Regelung der Fördergeschwindigkeiten und eine Abstimmung der einzelnen Geschwindigkeiten mehrerer Abzugsförderer aufeinander.

In weiterer Ausgestaltung der Erfindung ist vorgesehen, daß der Austragsförderer einen Näherungsinitiator zur Bestimmung der Schichthöhe aufweist. Diese Maßnahme ermöglicht eine besonders feine Dosierung und Steuerung der Austragsleistung des Bunkergutes in der Austragsöffnung und gestattet die Regelung der vorgeschalteten Förderorgane.

In Ausgestaltung der Erfindung ist vorgesehen, daß oberhalb des Wirkungsbereiches eines Abzugsförderers eine Einrichtung zur Entlastung des Abzugsförderers vom Druck des geschütteten Bunkergutes, vorzugsweise ein dachförmig ausgebildetes Schutzblech, angeordnet ist. Durch die Druckentlastung kann die erforderliche Antriebsleistung für die Transportbänder gesenkt werden, gleichzeitig wird der Abrieb des Bunkergutes vermindert.

Im folgenden wird die Erfindung anhand eines Ausführungsbeispieles in den Zeichnungen näher erläutert. Es zeigen:

Fig. 1     Prinzipskizze der Bunkerabzugsvorrichtung im Längsschnitt,

Fig. 2     Prinzipskizze der Bunkerabzugsvorrichtung im Querschnitt,

0155342
K H D
H 83/32

Fig. 3       Prinzipskizze der Bunkerabzugsvorrichtung mit Queraustrag im Längsschnitt,

Fig. 4       Prinzipskizze der Bunkerabzugsvorrichtung mit Queraustrag im Querschnitt,

Fig. 5       Prinzipskizze der Bunkerabzugsvorrichtung mit Queraustrag in Draufsicht.

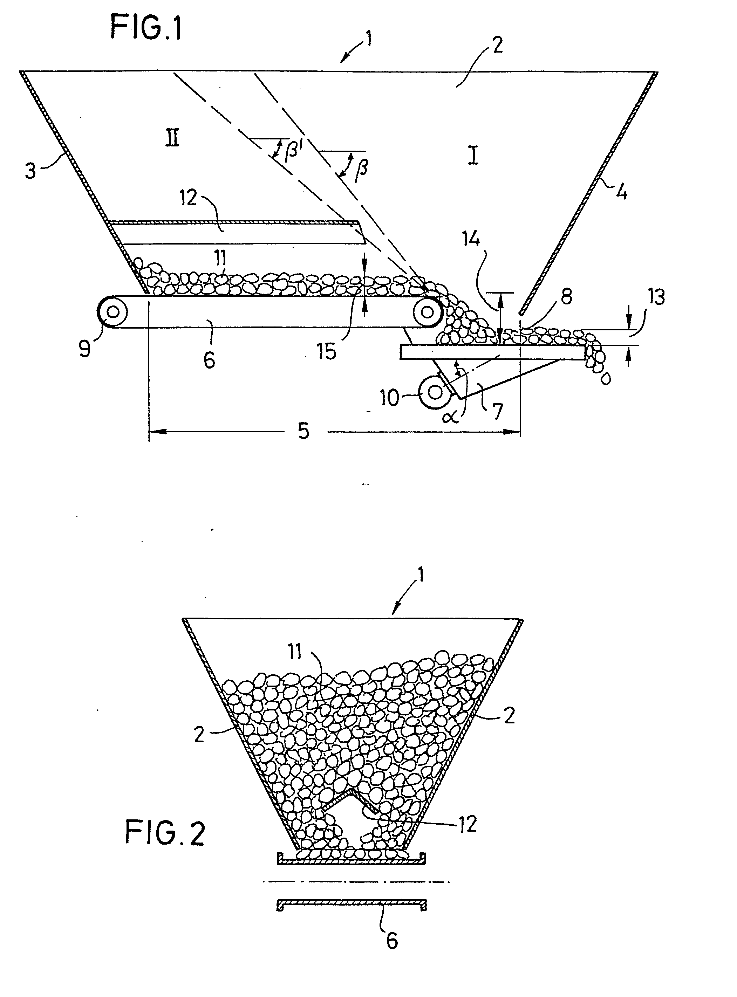

Die Figuren 1 und 2 zeigen den Austragsteil 1 eines Bunkers, mit Seitenwänden 2, Rückwand 3 und Vorderwand 4. Unter dem Abzugsschlitz 5 ist ein als Transportband ausgebildeter Abzugsförderer 6 sowie ein als Schwingförderrinne dargestellter Austragsförderer 7 gezeigt. Zwischen Austragsförderer 7 und der Vorderwand 4 befindet sich die Austragsöffnung 8. Der Austragsförderer 7 besitzt einen Antriebsmotor 9, der Abzugsförderer 6 einen Antriebsmotor 10, die einzeln eingeschaltet und in ihrer Leistungsabgabe geregelt werden können. Der Erregungswinkel $\alpha$ des Austragsförderers 7 kann verändert werden, insbesondere sind aber Amplitude und Frequenz des Austragsförderers 7 regelbar. Das im Bunker befindliche Gut 11 bildet eine Böschung mit dem statischen Böschungswinkel $\beta$ , beziehungsweise dem dynamischen Böschungswinkel $\beta'$ , die sich sowohl im Inneren des Bunkers sowie an der Nahtstelle zwischen Abzugsförderer 6 und Austragsförderer 7 einstellen. Zur Entlastung vom Druck des abgeböschten Bunkergutes 11 im Bunkeraustragsteil II ist oberhalb des Wirkungsbereiches des Abzugsförderers 6 ein dachförmig ausgebildetes Schutzblech 12 angeordnet.

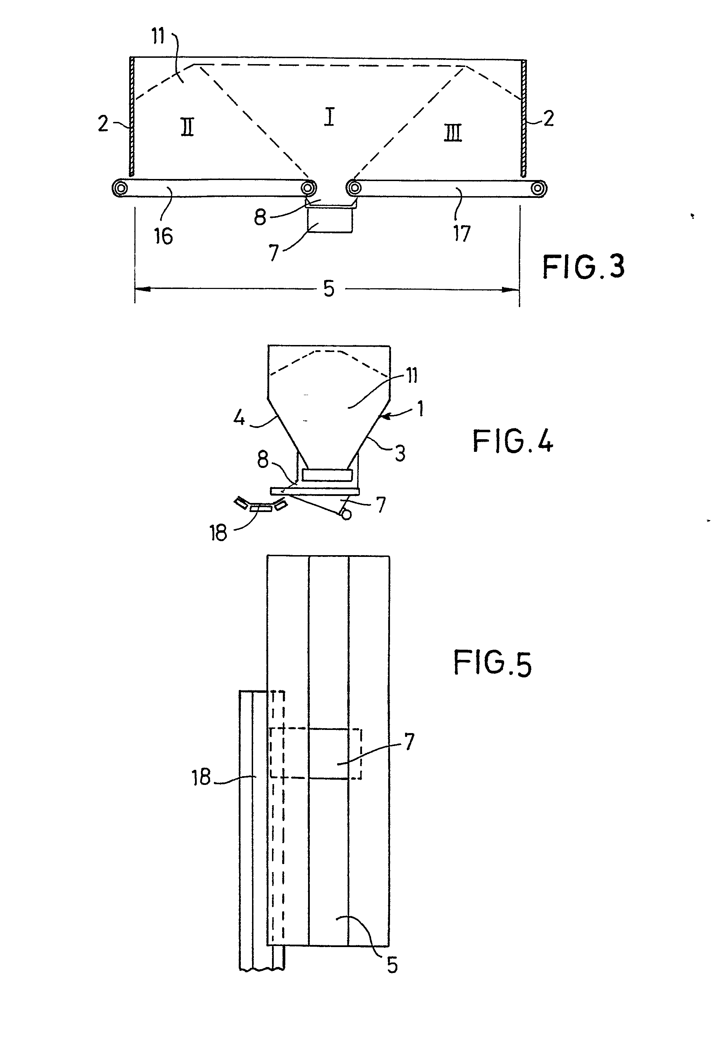

Die Figuren 3 bis 5 zeigen eine
Bunkerabzugsvorrichtung mit zwei Abzugsförderern 16,
17 und einer quer zur Längsrichtung des
Abzugsschlitzes 5 angeordneten Schwingförderrinne 7.
Die Austragsöffnung 8 ist parallel zur Längsrichtung
des Abzugsschlitzes 5 angeordnet. Den weiteren
Transport des aus der Schwingförderrinne 7
ausgetragenen Gutes 11 übernimmt eine geeignete
Transporteinrichtung 18. Das Bunkergut 11 ist bei
Bildung von Böschungen mit dem Böschungswinkel $\beta$
beziehungsweise $\beta'$ in die Bereiche I, II und III
aufgeteilt.

Bei Betrieb der erfindungsgemäßen Vorrichtung nach
dem erfindungsgemäßen Verfahren wird zur Entleerung
des gefüllten Bunkers zunächst der Austragsförderer 7
in Betrieb genommen. Er fördert das auf ihm liegende
Gut ab auf eine Transporteinrichtung 18, wobei
entsprechend dem statischen Böschungswinkel $\beta$ aus
dem Bunkeroberteil im Bereich I weiteres Gut 11
nachrutscht. Ist nun der Bunkerbereich I so weit
entleert, daß sich auf dem Austragsförderer 7 die
minimale Schichthöhe 13 eingestellt hat, wird
automatisch der Abzugsförderer 6 beziehungsweise
einer oder beide Abzugsförderer 16, 17 eingeschaltet,
so daß unter Abgabe des geförderten Gutes an die
weiterlaufende Schwingfördererinne 7 der Bunker im
Bereich II beziehungsweise III so weit entleert wird,
bis sich auf dem Schwingförderer 7 eine maximale
Schichthöhe 14 eingestellt hat, wonach der
Abzugsförderer 6 beziehungsweise 16, 17 abgeschaltet
wird. Die Abschaltung der gesamten Anlage erfolgt in
Abhängigkeit von einer minimalen Schichthöhe 15 auf
dem Transportband 6.

0155342
K H D
H 83/32

Das erfindungsgemäße Verfahren und die Vorrichtung
sind insbesondere für große Abzugsschlitze und für
den Austrag von Mineralien, zum Beispiel von Erzen,
Schlacken, Kohlen etc. gedacht. Verfahren und
Vorrichtung können jedoch ebenso vorteilhaft auch in
der chemischen Industrie, der Nahrungs- und
Arzneimittelindustrie angewandt werden, nämlich
überall dort, wo Bunker mit Abzugsschlitzen
installiert sind.

0155342
KAD
H 83/32

Patentansprüche

1. Verfahren zum Abziehen eines Bunkers mit einem Abzugsschlitz und einer seitlichen Austragsöffnung, wobei das Bunkergut unter dem Abzugsschlitz bis in den Bereich der Austragsöffnung mittels mindestens eines Abzugsförderers in Längsrichtung des Abzugsschlitzes bewegt und im Bereich der Austragsöffnung mittels eines Austragsförderers ausgetragen wird, dadurch gekennzeichnet, daß als Abzugsförderer (6, 16, 17) mindestens ein nicht schwingendes Förderorgan, vorzugsweise ein Transportband verwendet wird.

2. Verfahren nach Anspruch 1, dadurch gekennzeichnet, daß als Austragsförderer (7) ein schwingendes Förderorgan, vorzugsweise eine Schwingförderrinne verwendet wird.

3. Verfahren nach Anspruch 1 oder 2, dadurch gekennzeichnet, daß der Austragsförderer (7) quer zur Längsrichtung des Abzugsschlitzes (5) das Bunkergut (11) austrägt.

4. Verfahren nach einem der Ansprüche 1 bis 3, dadurch gekennzeichnet, daß die Förderung eines vorgeschalteten Förderorgans (6, 16, 17), insbesondere des Abzugsförderers, in Abhängigkeit von der Füllung des Bunkers, insbesondere nach Maßgabe der Schichthöhe (13, 14) des Bunkergutes auf dem nachgeschalteten Förderorgan (7) geregelt wird.

5. Verfahren nach Anspruch 4, dadurch gekennzeichnet, daß das vorgeschaltete Förderorgan (6, 16, 17) erst dann eingeschaltet wird, wenn auf dem nachgeschalteten Förderorgan (7) eine bestimmte minimale Schichthöhe (13) unterschritten wird und wieder abgeschaltet wird, wenn sich eine bestimmte maximale Schichthöhe (14) eingestellt hat.

6. Vorrichtung zum Abziehen eines Bunkers mit einem Abzugsschlitz und einer seitlichen Austragsöffnung zur Durchführung des Verfahrens nach einem der vorhergehenden Ansprüche, wobei unter dem Abzugsschlitz mindestens ein Abzugsförderer und im Bereich der Austragsöffnung ein Austragsförderer angeordnet ist, dadurch gekennzeichnet, daß ein Abzugsförderer (6, 16, 17) als nichtschwingendes Förderorgan, vorzugsweise als Transportband ausgebildet ist und daß der Austragsförderer (7) als schwingendes Förderorgan, vorzugsweise als Schwingförderrinne ausgebildet ist.

7. Vorrichtung nach Anspruch 6, dadurch gekennzeichnet, daß mehrere Abzugsförderer (6, 16, 17) vorgesehen sind, wobei jeder Abzugsförderer einen eigenen regelbaren Antrieb (10) aufweist und die einzelnen Abzugsförderer (6, 16, 17) derart beweglich miteinander verbunden sind, daß das Bunkergut (11) zur Austragsöffnung (8) gefördert wird.

8. Vorrichtung nach Anspruch 6 oder 7, dadurch gekennzeichnet, daß der Austragsförderer (7) quer zur Längsrichtung des Abzugsschlitzes (5) und die Abzugsförderer (16, 17) in Längsrichtung des Abzugsschlitzes (5) angeordnet sind.

9. Vorrichtung nach einem der Ansprüche 6 bis 8, dadurch gekennzeichnet, daß die Abzugsförderer (6, 16, 17) als Stahlzellenbänder, Plattenbänder, Kratzförderer, Kettenförderer, Schüttelrutschen oder Schubwagenspeiser oder als Kombination der genannten Förderorgane ausgebildet sind und der Austragsförderer (7) als Schwingförderrinne, kurzer Gurtförderer, Schüttelrutsche oder als Schubwagenspeiser ausgebildet ist.

10. Vorrichtung nach einem der Ansprüche 6 bis 9, dadurch gekennzeichnet, daß die Abzugsförderer (6, 16, 17) federnd gelagert sind und einen Näherungsinitiator zur Bestimmung der Schichthöhe (15) aufweisen.

11. Vorrichtung nach einem der Ansprüche 6 bis 10, dadurch gekennzeichnet, daß der Austragsföroerer (7) einen Näherungsinitiator zur Bestimmung der Schichthöhen (13, 14) aufweist.

12. Vorrichtung nach einem der Ansprüche 6 ois 11, dadurch gekennzeichnet, daß oberhalb des Wirkungsbereichs eines Abzugsförderers eine Einrichtung zur Entlastung des Abzugsförderers (6, 16, 17) vom Druck des geschütteten Bunkergutes (11), vorzugsweise ein dachförmig ausgebildetes Schutzblech (12), angeordnet ist.

FIG.1

FIG.2

0155342

FIG.3

FIG.4

FIG.5